Europäisches Patentamt

European Patent Office

Office européen des brevets

(11) Veröffentlichungsnummer: **0 096 792**
**A2**

(12) **EUROPÄISCHE PATENTANMELDUNG**

(21) Anmeldenummer: 83105342.6

(51) Int. Cl.³: **H 01 B 17/58**, H 01 B 17/30

(22) Anmeldetag: **30.05.83**

(30) Priorität: **11.06.82 DE 8217204 U**

(43) Veröffentlichungstag der Anmeldung: **28.12.83**
**Patentblatt 83/52**

(84) Benannte Vertragsstaaten: **CH DE FR GB IT LI**

(71) Anmelder: **SIEMENS AKTIENGESELLSCHAFT, Berlin und München Wittelsbacherplatz 2, D-8000 München 2 (DE)**

(72) Erfinder: **Rathmachers, Peter, Zollstrasse 6, D-6653 Blieskastel (DE)**
Erfinder: **Donner, Bernd, Blumenstrasse 2, D-6600 Saarbrücken (DE)**

(54) **Elektrisches Gerät mit Kabelanschluss.**

(57) Die Erfindung bezieht sich auf ein elektrisches Gerät mit Kabelanschluß. Der Kabelanschluß ist zum Schutz gegen äußere Einflüsse, insbesondere Feuchtigkeit, in eine Harzmasse eingebettet. Das Kabelende (1) hat zumindest eine nutförmige, radial am Umfang des Kabelmantels (4) verlaufende Aussparung (3), die im eingebauten Zustand mit Harzmasse (5) ausgefüllt ist.

SIEMENS AKTIENGESELLSCHAFT   Unser Zeichen
Berlin und München          VPA **82** P **8 5 1 7** E

**Elektrisches Gerät mit Kabelanschluß**

Die Erfindung bezieht sich auf ein elektrisches Gerät mit Kabelanschluß, der zum Schutz gegen äußere Einflüsse, insbesondere Feuchtigkeit, in eine Harzmasse eingebettet ist.

Bei einem bekannten Gerät der obengenannten Art (DE-OS 24 16 939) wird auf das Kabelanschlußende im Bereich des Gießharzes ein zur Mitte hin tief eingeschnürter Metallblechring aufgesteckt, der durch Zusammenpressen seiner beiden Flanschränder in Richtung der Kabelachse seinen Innendurchmesser verkleinert und hierbei durch Einschnürung des Kabelmantels einen festen Preßsitz auf dem Kabelanschlußende einnimmt. Dieser Metallblechring wird zusammen mit dem Kabelanschlußende in Gießharzmasse eingebettet, so daß an sich eine relativ gute Abdichtung und Halterung des Kabelendes in dem Gehäuse des Gerätes durchführbar ist. Bei hoher Beanspruchung des Kabels oder auch relativ hohen Außendrücken kann jedoch nur mit erheblichem Aufwand eine zufriedenstellende wasserdichte Kabeleinführung mit entsprechender Zugentlastung erreicht werden.

Der vorliegenden Erfindung liegt somit die Aufgabe zugrunde, die Kabeleinführung der obengenannten Art hinsichtlich des erforderlichen Aufwandes zu verbessern. Dies wird bei einem Gerät der obengenannten Art auf einfache Weise dadurch erreicht, daß das Kabelende zumindest eine nutförmige, am Umfang des Kabelmantels verlaufende Aussparung aufweist, die im eingebauten Zustand mit Harzmasse ausgefüllt ist. Hier können sowohl Gießharze als auch Schaumharze Verwendung finden. Um Beschä-

La 2 Syr / 08.06.1982

digungen im Innern des Kabels zu vermeiden ist es vorteilhaft, wenn die Aussparungsnut kreissegmentförmigen
Querschnitt aufweist. Um die Ausziehkraft und die Dichtwirkung auch bei extremen Bedingungen zu gewährleisten,
ist es vorteilhaft, wenn die Oberfläche der Aussparung
insbesondere durch Schleifen gerauht ist. Dies kann
durch Einschleifen mit einer Schleifscheibe erfolgen.
Hierzu ist es vorteilhaft, wenn die Nutoberfläche im
Querschnitt gesehen sägezahnförmig gerillt ist. Die Verbindung zwischen gerauhtem Kabel und Harzmasse hängt von
der Zusammensetzung des Kabelmantels und der Harzmasse
selbst und deren möglicher Verbindung ab. Als besonders
vorteilhaft hat es sich erwiesen, wenn der Kabelmantel
aus PVC (Polyvenylchlorid) und die Harzmasse aus PU-
Schaum (Polyurethan) ist.

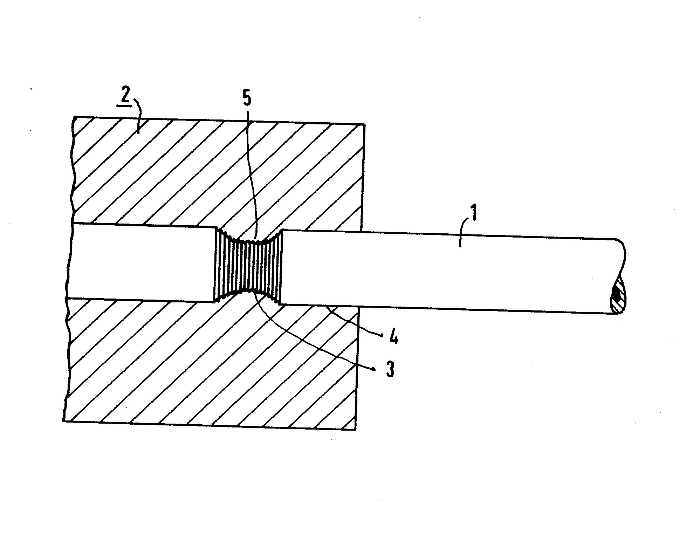

Anhand der Zeichnung wird ein Ausführungsbeispiel gemäß
der Erfindung beschrieben.

Das Kabelende 1 des in der Zeichnung schematisch angedeuteten elektrischen Gerätes 2 ist mit einer nutförmigen Aussparung 3 versehen, die radial um den Umfang des
Kabelmantels 4 verläuft. Die nutförmige Aussparung ist
an ihrem Boden kerb- oder sägezahnartig ausgebildet, so
daß der eingebrachte PU-Schaum 5 eine innige Verbindung
zwischen Kabel und Gerät 2 herstellt. Bei Verwendung
von PVC-Kabeln und Polyurethanschaum haben die Geräte
eine Dichtigkeitsprüfung mit 10 bar ausgehalten. Wichtig für die innige Verbindung ist eine entsprechende
Rauhigkeit der Begrenzungsfläche der nutförmigen Aussparung, so daß eine intensive Verbindung zwischen beiden Materialien eintreten kann.

5 Patentansprüche
1 Figur

0096792

Patentansprüche

1. Elektrisches Gerät mit Kabelanschluß, der zum Schutz gegen äußere Einflüsse, insbesondere Feuchtigkeit, in eine Harzmasse eingebettet ist, d a d u r c h  g e - k e n n z e i c h n e t ,  daß das Kabelende (1) zumindest eine nutförmige, radial am Umfang des Kabelmantels (4) verlaufende Aussparung (3) aufweist, die im eingebauten Zustand mit Harzmasse (5) ausgefüllt ist.

2. Gerät nach Anspruch 1, d a d u r c h  g e k e n n - z e i c h n e t ,  daß die Aussparungsnut (3) kreissegmentförmigen Querschnitt aufweist.

3. Gerät nach Anspruch 1 oder 2, d a d u r c h  g e - k e n n z e i c h n e t ,  daß die Oberfläche der Aussparung (3) insbesondere durch Schleifen gerauht ist.

4. Gerät nach Anspruch 3, d a d u r c h  g e k e n n - z e i c h n e t ,  daß die Nutoberfläche im Querschnitt gesehen sägezahnförmig gerillt ist.

5. Gerät nach einem der Ansprüche 1 bis 4, d a d u r c h  g e k e n n z e i c h n e t ,  daß der Kabelmantel (4) aus PVC (Polyvenylchlorid) und die Harzmasse aus PU-Schaum (5) (Polyurethan) ist.

0096792

82 P 8517